# EUROPEAN PATENT APPLICATION

(11) **EP 1 661 851 A1**
(43) Date of publication of application: **31.05.2006**
(21) Application number: 04772476.0
(22) Date of filing: 31.08.2004
(51) Int. Cl.: B82B 3/00, B82B 1/00, H01J 9/02, H01J 29/04, G11B 5/73, G11B 5/855

(54) **FINE STRUCTURE BODY-PRODUCING METHOD, FINE STRUCTURE BODY, DISPLAY DEVICE, RECORDING DEVICE-PRODUCING METHOD, AND RECORDING DEVICE**

(30) Priority: 05.09.2003 JP 2003314106
(71) Applicant: SONY CORPORATION, Tokyo 141 (JP)
(72) Inventor: GOSAIN, Dharam, Pal;, Shinagawa-ku Tokyo,1410001 (JP); KAJIURA, Hisashi; c/o Sony Corporation, Shinagawa-ku Tokyo; 1410001 (JP); MURAKAMI, Yosuke; C/O Sony Corporation, Shinagawa-ku Tokyo; 1410001 (JP); ATA, Masafumi; c/o Sony Corporation, Shinagawa-ku Tokyo; 1410001 (JP)
(74) Representative: Müller, Frithjof E.
(86) International application number: PCT/JP2004/012520
(87) International publication number: WO 2005/023705

(57) **Abstract**

A method of manufacturing a fine structure capable of accurately controlling formation positions of tubular structures made of carbon or the like is provided. Column-shaped protrusions (11) are formed on a substrate (10). Next, a catalyst material (20) such as iron (Fe) is adhered to the substrate (10). Subsequently, by providing the substrate (10) with heat treatment, the catalyst material (20) is melted and agglomerated on the side faces (11A) of the protrusions (11), and thereby cyclic catalyst patterns made of the catalyst material (20) are formed on the side faces (11A) of the protrusions (11). After that, tubular structures (30) in a state of tube are grown by using the catalyst patterns. The tubular structures (30) become carbon (nano) pipes, which are raised from the side faces (11A) of the protrusions (11) and whose ends (30A) are opened. The tubular structures (30) can be formed correspondingly to the positions of the protrusions (11) accurately.

## Description

### TECHNICAL FIELD

The present invention relates to a method of manufacturing a fine structure of forming tubular structures made of carbon or the like by using a catalyst, a fine structure obtained by the method, and a display unit using the fine structure as a field electron emission device. Further, the present invention relates to a method of manufacturing a recoding device using the method of manufacturing a fine structure and a recoding device obtained by the method.

### BACKGROUND ART

In recent years, nanotechnology has been significantly advanced. Specially, since molecular structures such as carbon nanotubes are stable materials having superior characteristics such as thermal conductivity, electric conductivity and mechanical strength, the molecular structures are expected to be applied to wide usages such as transistors, memories, field electron emission devices.

For example, as a usage of carbon nanotubes, it is known that carbon nanotubes are suitable for realizing cold cathode field electron emission (hereinafter referred to as "field electron emission") (for example, refer to Document 1 to Document 5). Field electron emission is a phenomenon that when an electric field equal to or more than a given threshold is applied to a metal or a semiconductor placed in vacuum, electrons pass through the energy barrier in the vicinity of the surface of the metal or the semiconductor by quantum tunnel effect, and electrons are emitted into vacuum at ambient temperature.

More recently, a carbon fine structure called a carbon nanosheet has attracted attention. The carbon nanosheet has characteristics that the carbon nanosheet has sharp edges and a large surface area. Therefore, the carbon nanosheet is expected to provide field electron emission characteristics better than of carbon nanotubes. According to Document 6 and Document 7, the threshold at which field electron emission occurs in the carbon nanosheets is 0.16 V/µm, which is significantly lower than of traditional carbon nanotubes. Further, in Document 7, an example of a carbon nanosheet grown using ultrasonic plasma CVD method is reported.

Further, another technology related to the present invention is magnetic recording device. The principle thereof is that a magnetic material is magnetized, and depending on the coercive force, the magnetization direction corresponds to "1" or "0," or to a signal analog amount for recording the magnetic degree in magnetization. For magnetization, both in-plane magnetization on a level with the recording face and vertical magnetization perpendicular to the recording face are practically used. In recent years, further improvement of recording density has been demanded. Such a demand has been traditionally addressed by decreasing the magnetization length. As far as the inventors know, an attempt to apply carbon nanotubes or a carbon nanosheet to such a magnetic recording technology has not been disclosed.
(Document 1) J.-M. Bonard et al., "Applied Physics A," 1999, Vol. 69, p. 245
(Document 2) J.-M. Bonard et al., "Solid State Electronics," 2001, Vol. 45, p. 893
(Document 3) Y. Saito et al., "Applied Physics A," 1998, Vol. 67, p. 95
(Document 4) Zheng-wei Pan et al., "Chemical Physics Letters," 2003, Vol. 371, p. 433
(Document 5) "nano tech 2003+Future, international conference and international exhibition on nanotechnology, Program & Abstracts," 2003, Vol. 14, p.204
(Document 6) Y. Wu, "Nano Lett.," 2002, Vol. 2, p.355
(Document 7) WU Yihong and other three authors, "Carbon Nanowalls Grown by Microwave Plasma Enhanced Chemical Vapor Deposition, Advanced Materials (Germany), 2002, Vol. 14, No. 1, pp. 64-67

However, in Document 7, since the formation position of the carbon nanosheet is not controlled, application to an FED was difficult.

In order to precisely control the formation position of a carbon nanosheet, it is necessary to form patterns of a catalyst made of a transition metal or the like with high position accuracy. It is significantly difficult to arrange a catalyst at the intervals in unit of nanometer. In the past, as a technology capable of forming fine patterns of a catalyst at intervals narrower than 200 nm, there was only electron beam lithography. The electron beam lithography is useful in small-lot test production, but is not suitable for large scale production or mass production.

### DISCLOSURE OF THE INVENTION

In view of the foregoing, it is a first object of the present invention to provide a method of manufacturing a fine structure capable of precisely controlling formation positions of tubular structures made of carbon or the like and a method of manufacturing a recording device using it.

The second object of the present invention is to provide a fine structure precisely formed in a desired position, and a display and a recording device using it.

A method of manufacturing a fine structure according to the present invention includes a protrusion formation step of forming protrusions on a substrate, a catalyst pattern formation step of forming catalyst patterns made of a material having a catalytic function on the side faces of the protrusions, and a tubular structure formation step of growing tubular structures by using the catalyst patterns. The shape of the catalyst patterns may be an unclosed shape such as a linear shape or a curve shape, or a closed shape such as a circular shape. For example, it is possible that the protrusions are formed in a column shape, the catalyst patterns are formed circularly, and the tubular structures are formed in a state of tube.

A fine structure according to the present invention includes a substrate formed with protrusions, a material having a catalytic function arranged on the side faces of the protrusions, and tubular structures which are raised from the side faces of the protrusions and whose ends are opened.

A display unit according to the present invention includes: a fine structure having a substrate formed with protrusions, a material having a catalytic function arranged on the side faces of the protrusions, and tubular structures which are raised from the side faces of the protrusions and whose ends are opened; an electrode for applying a given voltage to the tubular structures and to allow the tubular structure to emit electrons; and a light emitting portion for receiving the electrons emitted from the fine structure and emitting light.

A method of manufacturing a recording device according to the present invention includes a protrusion formation step of forming protrusions on a substrate, a catalyst pattern formation step of forming catalyst patterns made of a material having a catalytic function, on the side faces of the protrusions, a tubular structure formation step of growing tubular structures by using the catalyst patterns, and an insertion step of inserting a magnetic material into at least at the end of the tubular structure. Here, the protrusion formation step includes a melting step of providing the surface of the substrate with heat distributions modulated according to desired patterns and melting the surface of the substrate and a heat release step of forming protrusions in positions corresponding to the heat distributions by releasing heat from the surface of the substrate.

A recording device according to the present invention includes a substrate having a plurality of protrusions and a plurality of recording elements corresponding to the plurality of protrusions. Each of the plurality of recording elements includes a material having a catalytic function, which is arranged on the side face of the protrusion, a tubular structure which is raised from the side face of the protrusion and whose end is opened, and a magnetic layer made of a magnetic material, which is inserted into at least at the end of the tubular structure.

In the method of manufacturing a fine structure according to the present invention, the protrusions are formed on the substrate, subsequently, the catalyst patterns made of the material having a catalytic function are formed on the side faces of the protrusions. After that, the tubular structures are grown using the catalyst patterns.

The fine structure according to the present invention has the tubular structures which are raised from the side faces of the protrusions and whose ends are opened. Therefore, the position accuracy of the tubular structures is improved.

In the display according to the present invention, when a given voltage is applied to the tubular structures, electrons are emitted from the ends of the tubular structures, and the light emitting portion receives the electrons and emits light.

In the method of manufacturing a recording device according to the present invention, the protrusions are formed on the substrate, on the side faces of the protrusions, catalyst patterns made of a material having a catalytic function are formed. Subsequently, the tubular structures are grown using the catalyst patterns. After that, the magnetic material is inserted into at least at the ends of the tubular structures.

In the recording device according to the present invention, the magnetic layer inserted into each tubular structure is isolated from the magnetic layer in adjacent other tubular structures. Therefore, writing information to the magnetic layer in each tubular structure or reading therefrom can be surely performed.

According to the method of manufacturing a fine structure of the present invention, the protrusions are formed on the substrate, the linear catalyst patterns made of the material having a catalytic function are formed on the side faces of the protrusions, and then the tubular structures are grown by using the catalyst patterns. Therefore, the tubular structures can be formed correspondingly to the positions of the protrusions accurately. Therefore, the formation positions of the tubular structures can be accurately controlled with a simple method, a large scale array can be easily realized, leading to advantages in mass production.

The fine structure of the present invention has tubular structures, which are raised from the side faces of the protrusions and whose ends are opened. Therefore, the position accuracy of the tubular structures can be improved, and the orientations and the heights of the all tubular structures can be easily aligned.

The display of the present invention includes the fine structure of the present invention as a field electron emission device. Therefore, the display characteristics in the screen can be uniform, and superior display quality can be achieved even in the large screen.

According to the method of manufacturing a recording device of the present invention, the fine structure is formed by the method of the present invention, and the magnetic material is inserted into the tubular structures of the fine structure. Therefore, the recording device using the tubular structures made of carbon or the like can be easily realized with a simple method. Further, the step of opening the end of the tubular structure and alignment of the height thereof is not necessary, and the magnetic layers can be effectively formed.

The recording device according to the present invention includes the fine structure according to the present invention as a recording element. Therefore, the position accuracy of the tubular structures and the magnetic layers inserted inside thereof is improved, and the characteristics of the recording device can be improved. Further, since the magnetic layers are isolated from each other by the tubular structures, a given magnetization direction can be stably retained for a long time without being influenced by the magnetic layer in the adjacent other tubular structures, and reliability of the recording device can be improved.

### BRIEF DESCRIPTION OF THE DRAWINGS

Fig. 1 is a perspective view showing a method of manufacturing a fine structure according to a first embodiment of the present invention in the order of steps;
Fig. 2 is a perspective view showing a step following Fig. 1;
Fig. 3 is a perspective view showing a step following Fig. 2;
Fig. 4 is a perspective view showing a step following Fig. 3;
Fig. 5 is a perspective view showing an example of a display using a fine structure shown in Fig. 4;
Fig. 6 is a perspective view showing a method of manufacturing a fine structure according to a second embodiment of the present invention in the order of steps;
Fig. 7 is a perspective view showing a step following Fig. 6;
Fig. 8 is a perspective view showing a step following Fig. 7;
Fig. 9 is a perspective view showing a step following Fig. 8;
Fig. 10 is a perspective view showing a step following Fig. 9
Fig. 11 is a perspective view showing a method of manufacturing a fine structure according to a third embodiment of the present invention in the order of steps;
Fig. 12 is a perspective view showing a step following Fig. 11;
Fig. 13 is a perspective view showing a step following Fig. 12;
Fig. 14 is a perspective view showing a step following Fig. 13;
Fig. 15 is a perspective view showing a model of a melting step in a method of manufacturing a recording device according to a fourth embodiment of the present invention;
Fig. 16 is a plan view showing a model of an example of heat distributions formed on the surface of a substrate shown in Fig. 15;
Fig. 17 is a plan view showing another example of the heat distributions shown in Fig. 16;
Fig. 18 is a perspective view showing a model of a step (heat release step) following Fig. 15;
Fig. 19 is a plan view showing an enlarged part of the surface of a substrate shown in Fig. 18;
Fig. 20 is a plan view showing an enlarged part of the surface of the substrate in the case that the heat distributions shown in Fig. 17 are formed and then the heat release step is performed;
Fig. 21 is a cross section showing a model of a step (catalyst pattern formation step) following Fig. 20;
Fig. 22 is a cross section showing a model of a step (tubular structure formation step) following Fig. 21;
Fig. 23A is a cross section showing a model of a step (insertion step) following Fig. 22;
Fig. 23B is a cross section showing a model of a step (insertion step) following Fig. 22;
Fig. 24 is a perspective view showing a model of an example of recoding states in a recording device shown in Fig. 23A and Fig. 23B;
Fig. 25A is an SEM photograph of a fine structure according to Example 1 of the present invention;
Fig. 25B is an enlarged photograph of Fig. 25A;
Fig. 25C is an enlarged photograph of Fig. 25B;
Fig. 26A is an SEM photograph showing the fine structure according to Example 1 from various angles;
Fig. 26B is an enlarged photograph of Fig. 26A;
Fig. 26C is an enlarged photograph of Fig. 26B;
Fig. 27 is an SEM photograph of a fine structure according to Example 2 of the present invention;
Fig. 28 is an SEM photograph of a sample according to a comparative example;
Fig. 29A is a TEM photograph showing a structure of the fine structure according to Example 2;
Fig. 29B is an enlarged photograph of Fig. 29A;
Fig. 29C is an enlarged photograph of Fig. 29B;
Fig. 30 is a view showing a result obtained by analyzing a material of the fine structure according to Example 1 by TEM and EDX;
Fig. 31 is a view showing a result obtained by analyzing the material of the fine structure according to Example 1 by TEM and EELS;
Fig. 32 is a view showing field electron emission characteristics of the fine structure according to Example 2;
Fig. 33 is a view showing F-N plot corresponding to Fig. 32; and
Fig. 34 is a perspective view showing a modified example of the fine structure shown in Fig. 4.

### BEST MODE FOR CARRYING OUT THE INVENTION

Embodiments of the present invention will be hereinafter described in detail with reference to the drawings.

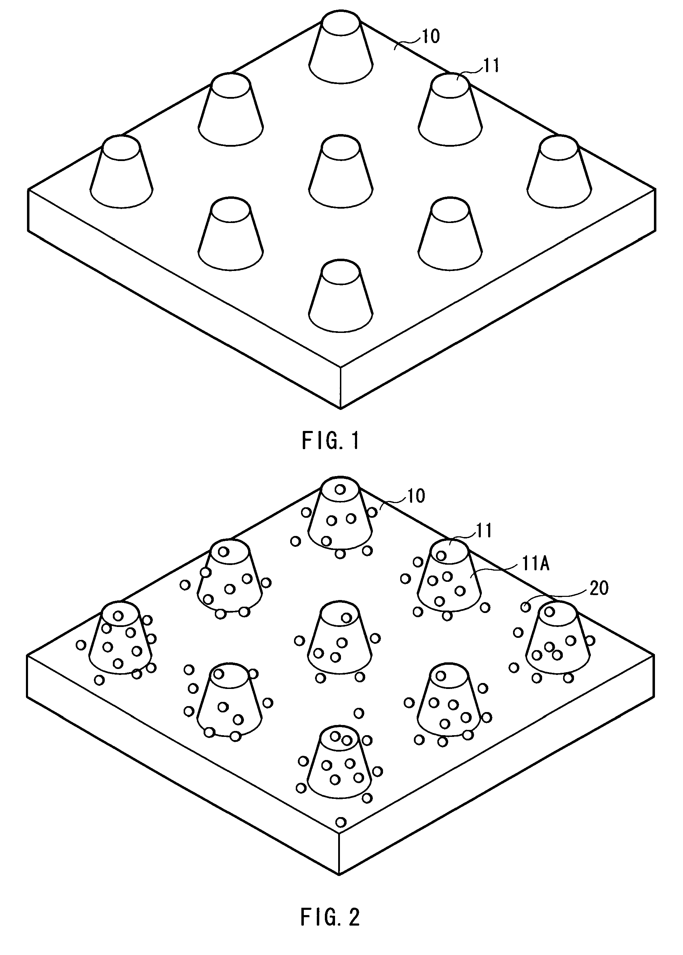

[First embodiment]
<Method of manufacturing a fine structure>
Figs. 1 to 3 show a method of manufacturing a fine structure according to a first embodiment of the present invention. The method of this embodiment is intended to form a fine structure used as a field electron emission device of an FED, for example. The method of this embodiment includes a "protrusion formation step" of forming protrusions on a substrate, a "catalyst pattern formation step" of forming linear catalyst patterns made of a material having a catalytic function (hereinafter referred to as "catalyst material") on the side faces of the protrusions, and a "tubular structure formation step" of growing tubular structures by using the catalyst patterns.

(Protrusion formation step)
First, as shown in Fig. 1, a substrate 10 made of a semiconductor such as silicon (Si) is prepared. On the substrate 10, protrusions 11 are formed in a state of cyclic array by, for example, photolithography and etching.

The shape of the protrusion 11 is not particularly limited. However, when the protrusions 11 are formed in a state of cyclic array, for example, the shape is preferably a closed shape such as a cylindrical column, a square pole, a triangle pole, a star-like pole, and an oval pole. In particular, the column shape is preferable. The column-shaped protrusion 11 can be easily formed by photolithography and etching. A side face 11A of the protrusion 11 is not necessarily sloped, but may be perpendicular to the surface of the substrate 10.

The diameter of the protrusion 11 is determined by considering the diameter of the tubular structure to be desirably formed and the formation method of the protrusion 11. For example, in the case of photolithography, the diameter of the protrusion 11 can be 200 nm at the minimum. Here, the diameter of the protrusion 11 means a diameter at the bottom of the side face 11A of the protrusion 11. The height of the protrusion 11 is not particularly limited as long as the height is larger than the size of the atom or the molecule of a catalyst material. In this embodiment, the protrusion 11 is formed, for example, in a column shape being 200 nm in diameter and 0.5 µm in height.

(Catalyst pattern formation step)
Next, as a catalyst pattern formation step, in this embodiment, for example, an "adhesion step" of adhering a catalyst material to the substrate 10 and an "agglomeration step" of melting the catalyst material by providing the substrate 10 with heat treatment and agglomerating the melted catalyst material on the side faces 11A of the protrusions 11 are performed.

(Adhesion step)
That is, first, as shown in Fig. 2, a catalyst material 20 is adhered to the substrate 10 by, for example, sputtering. Since the protrusions 11 are formed on the substrate 11, the catalyst material 20 is adhered on the side faces 11A of the protrusions 11 and in the vicinity thereof more than in flat portions. The reason thereof is that, plasma concentrates on the protrusions 11, and atoms have the property to assemble on the steps. Such property of atoms is used for orienting atoms on silicon substrates by utilizing particular crystal faces of the silicon substrates.

Further, then, the catalyst material 20 is preferably adhered to the substrate 10 with the thickness to the degree that the catalyst material 20 can be melted and agglomerated on the side faces 11A of the protrusions 11 in the next agglomeration step. When the thickness of the catalyst material 20 to be adhered is large, moving and agglomerating the catalyst material 20 become difficult. For example, the catalyst material 20 may be adhered to the substrate 10 with the thickness not forming a continuous film, that is, may be adhered to the surface of the substrate 10 in a island shape. Otherwise, a continuous but extremely thin film may be formed. Specifically, the thickness of the catalyst material 20 to be adhered can be about the roughness of the surface of the substrate 10, for example, less than 1 nm.

For the catalyst material 20, as a metal catalyst for forming tubular structures made of carbon (C), in addition to iron (Fe), vanadium (V), manganese (Mn), cobalt (Co), nickel (Ni), molybdenum (Mo), tantalum (Ta), tungsten (W), or platinum (Pt) can be cited. Further, yttrium (Y), lutetium (Lu), boron (B), copper (Cu), lithium (Li), silicon (Si), chromium (Cr), zinc (Zn), palladium (Pd), silver (Ag), ruthenium (Ru), titanium (Ti), lanthanum (La), cerium (Ce), praseodymium (Pr), neodymium (Nd), terbium (Tb), dysprosium (Dy), holmium (Ho), or erbium (Er) may be used. Two or more of the foregoing materials may be used concurrently, or a compound made of two or more of the foregoing materials may be used. Further, a metal phthalocyan compound, metaseron, a metallic salt can be used. Furthermore, an oxide or a silicide may be used.

In addition, in some usages, as the catalyst material 20, a dielectric material made of a nitride, an oxide, a carbide, a fluoride, a sulfide, a nitrogen oxide, a nitrogen carbide, an oxygen carbide or the like of an element of a metal or a metalloid such as aluminum (Al), silicon (Si), tantalum (Ta), titanium (Ti), zirconium (Zr), niobium (Nb), magnesium (Mg), boron (B), zinc (Zn), lead (Pb) calcium (Ca), lanthanum (La), and germanium (Ge) can be used. Specifically, AlN, Al₂O₃, Si₃N₄, SiO₂, MgO, Y₂O₃, MgAl₂O₄, TiO₂, BaTiO₃, SrTiO₃, Ta₂O₅, SiC, ZnS, PbS, Ge-N, Ge-N-O, Si-N-O, CaF₂, LaF, MgF₂, NaF, TiF₄ or the like can be cited. Further, a material having the foregoing material as a main component, or a mixture of the foregoing materials such as AlN-SiO₂ can be used. Furthermore, a magnetic material of iron (Fe), cobalt (Co), nickel (Ni), gadolinium (Gd) or the like can be used.

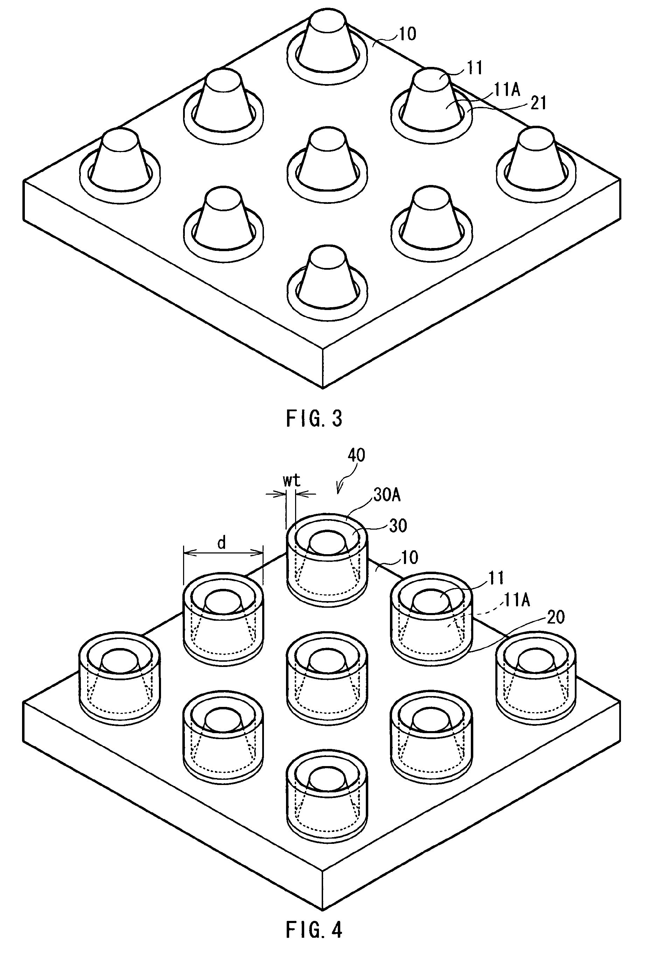

(Agglomeration step)
Next, the substrate 10 is provided with heat treatment, and thereby the catalyst material 20 is melted and agglomerated on the side faces 11A of the protrusions 11. Heat treatment can be performed by, for example, heat annealing method, laser irradiation, ultrasonic irradiation, micro wave irradiation, or IR (infrared) lamp irradiation. Thereby, small islands made of the catalyst material 20 are melted into a large island, and as shown in Fig. 3, linear catalyst patterns 21 made of the catalyst material 20 are formed on the side faces 11A of the protrusions 11. In this embodiment, the protrusions 11 are formed in a column shape. Therefore, the catalyst patterns 21 are formed circularly around the protrusions 11. Then, the width of the catalyst pattern 21 may be controlled by the adhesion amount of the catalyst material 20.

(Tubular structure formation step)
Subsequently, as shown in Fig. 4, by using the catalyst patterns 21, tubular structures 30 made of, for example, carbon (C) are grown by, for example, CVD (Chemical Vapor Deposition) method. The tubular structures 30 become tubes, which are raised from the side faces 11A of the protrusions 11 with ends 30A opened, that is, carbon (nano) pipes. Therefore, the tubular structures 30 can be formed correspondingly to the positions of the protrusions 11 accurately, the formation positions of the tubular structures 30 can be easily and accurately controlled, and a large-scale array thereof can be easily realized. Further, the protrusions 11 can be formed by photolithography with mass production characteristics superior to that of electron beam lithography, leading to advantages in mass production.

Further, the tubular structures 30 are formed in a state of tube with the ends 30A opened. Therefore, the height of all the ends 30A become identical, and complex steps such as opening the end or leveling the height by cutting as in general carbon nanotubes become unnecessary. Further, the orientations and the heights of the tubular structures 30 can be easily uniformed.

In particular, in this embodiment, since the catalyst patterns 21 are circular, the tubular structures 30 become tubular. Therefore, in the case of using as a field electron emission device, the end 30A of the tubular structure 30 has the identical height in all positions in the circumferential direction, the distance between the end 30A and the extracting electrode can be easily uniformed, and electrons can be uniformly emitted from the whole end 30A.

Further, a wall thickness wt of the tubular structure 30 becomes extremely thin compared to the area of the region surrounded by the tubular structure 30. Therefore, the ends 30A become a sharp edge, and high field electron emission characteristics can be obtained. Here, "region surrounded by the tubular structure 30" means a region surrounded by the wall of the tubular structure 30 in the case that the tubular structure 30 is closed. In the case that the tubular structure 30 is not closed, "region surrounded by the tubular structure 30" means the dimension of the wall of the tubular structure 30 in the direction of its extension.

The wall thickness wt of the tubular structure 30 is preferably, for example, less than or equal to one half of a diameter d of the tubular structure 30. That is, since the diameter d of the tubular structure 30 is 200 nm at the minimum as the diameter of the protrusion 11, the wall thickness wt of the tubular structure 30 is preferably less than or equal to 100 nm. When the wall thickness wt of the tubular structure 30 is excessively thick compared to the diameter d, an electric field is hard to concentrate on the tubular structures 30 in the case of using it as a field electron emission device. Further, the wall thickness wt of the tubular structure 30 is more preferably less than or equal to 50 nm, and much more preferably less than or equal to 30 nm. Thereby, the ends 30A can become a sharper edge, and even higher field electron emission characteristics can be obtained.

Meanwhile, the diameter d of the tubular structure 30 is not necessarily too small. For example, as described above, the diameter d of the tubular structure 30 can be 200 nm at the minimum as the diameter of the protrusion 11. The reason thereof is that, field electron emission characteristics are determined by the wall thickness wt rather than the diameter d of the tubular structure 30. Further, though the diameter d of the tubular structure 30 is larger than that of a carbon nanotube, the tubular structures 30 are favorably jointed to the substrate 10, leading to advantages of improved stability and durability. The height of the tubular structure 30 is not particularly limited, and is set according to usages.

After the tubular structure 30 is grown, the catalyst material 20 of the catalyst pattern 21 is arranged between the substrate 10 and the tubular structure 30. However, in some cases, though not shown, the catalyst material 20 exists not only between the substrate 10 and the tubular structure 30, but also at the end 30A of the tubular structure 30. Further, the catalyst pattern 21 may remain linearly or may be somewhat in a state of broken line. Consequently, a fine structure 40 of this embodiment is completed.

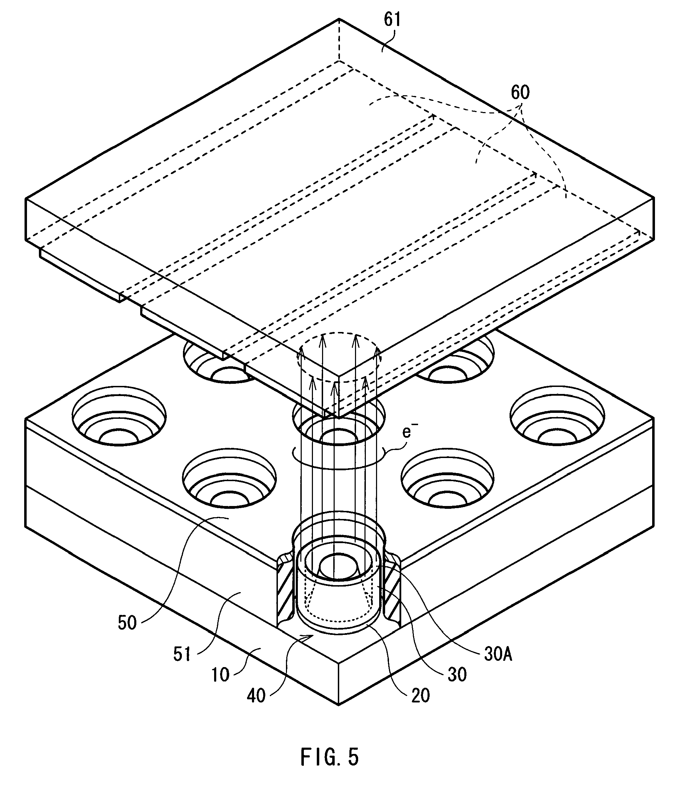

<Display>
Fig. 5 shows an example of an FED including the fine structure 40. The FED includes the fine structure 40 as a field electron emission device, a gate electrode 50 and an unshown cathode electrode for applying a given voltage to the tubular structures 30 to allow the tubular structures 30 to emit electrons e⁻, and a fluorescent portion 60 for receiving the electrons e⁻ emitted from the fine structure 40 and emitting light. The fine structure 40 is provided on the substrate 10 in a state of matrix, and is electrically connected to the cathode electrode provided on the substrate 10. The gate electrode 50 is provided for the substrate 10 with an insulating film 51 in between. The fluorescent portion 60 is provided on an opposed substrate 61 made of glass or the like so that the fluorescent portion 60 is opposed to each fine structure 40. The opposed substrate 61 is provided with an unshown anode electrode.

In the FED, when a voltage is selectively applied between the cathode electrode and the gate electrode 50, field electron emission occurs in the fine structure 40 positioned in the intersection thereof, and electrons e⁻ are emitted from the tubular structures 30. The electrons e⁻ emitted from the fine structure 40 collide with the fluorescent portion 60, and make the fluorescent material emit light. Due to the light emission of the fluorescent material, a desired image is displayed. Here, the fine structure 40 has the tubular structures 30 formed by using the catalyst patterns 21 formed on the side faces 11A of the protrusions 11. Therefore, position accuracy of the tubular structures 30 is high, the ends 30A are a sharp edge, and field electron emission characteristics are improved. Further, the orientations and the heights of the tubular structures 30 are uniformed, and the display characteristics in the screen are uniformed.

As above, in this embodiment, the protrusions 11 are formed on the substrate 10; the catalyst material 20 is adhered to the substrate 10; the substrate 10 is provided with heat treatment to fuse the catalyst material 20 and to agglomerate the melted catalyst material 20 on the side faces 11A of the protrusions 11 and thereby the linear catalyst patterns 21 made of the catalyst material 20 are formed on the side faces 11A of the protrusions 11; and then the tubular structures 30 are grown by using the catalyst patterns 21. Therefore, the tubular structures 30 can be formed correspondingly to the positions of the protrusions 11 accurately. Therefore, the formation positions of the tubular structures 30 can be accurately controlled with a simple method not by using electron beam lithography but by using traditional lithography, a large scale array can be easily realized, leading to advantages in mass production.

Further, since the tubular structures 30 are formed in a state of tube with the ends 30A opened, the height of all the ends 30A become identical, and complex steps such as opening the end or leveling the height by cutting as in general carbon nanotubes become unnecessary. Further, the orientations and the heights of the tubular structures 30 can be easily uniformed, and in the case of applying it to an FED, the display characteristics in the screen are uniformed and superior display quality can be achieved even in a large screen.

Further, the wall thickness wt of the tubular structure 30 is significantly thin compared to the surface area of the tubular structure 30. Therefore, the ends 30A become a sharp edge, and high field electron emission characteristics can be obtained.

In particular, in this embodiment, the protrusions 11 are formed in a column shape, the catalyst patterns 21 are formed circularly, and the tubular structures 30 are formed in a state of tube. Therefore, in the case of using as a field electron emission device, the distance between the end 30A of the tubular structure 30 and the gate electrode 50 can be easily uniformed, electrons are uniformly emitted from the whole end 30A, and uniform field electron emission characteristics can be obtained.

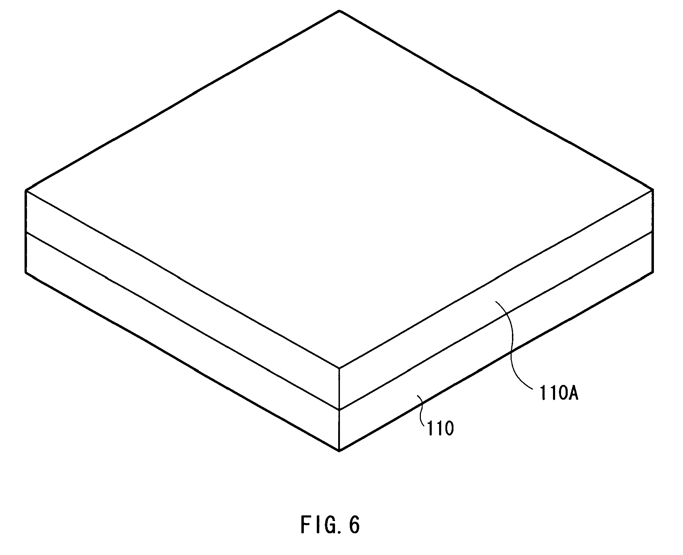

[Second embodiment]
<Method of manufacturing a fine structure>
Figs. 6 to 10 show a method of manufacturing a fine structure according to a second embodiment of the present invention. The method of this embodiment is the same as of the first embodiment, except that in a protrusion formation step, a semiconductor layer 110A is formed on a substrate 110 made of an insulating material, the semiconductor layer 110A is etched until the surface of the substrate 110 is exposed and thereby protrusions 111 are formed. Therefore, the same symbols are affixed to the same components, and the descriptions thereof are omitted.

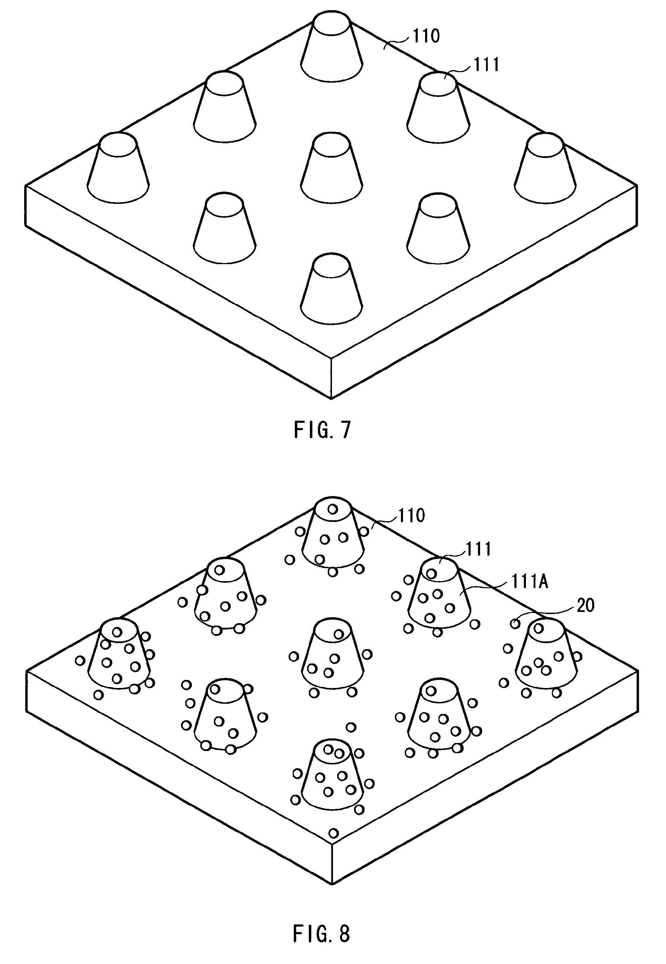

(Protrusion formation step)
First, as shown in Fig. 6, for example, the substrate 110 made of an insulating material such as glass is prepared. On the substrate 110, the semiconductor layer 110A made of, for example, polycrystalline silicon is formed by, for example, CVD method, plasma CVD (PECVD: Plasma Enhanced Chemical Vapor Deposition) method, or sputtering. After that, as shown in Fig. 7, the semiconductor layer 110A is provided with photolithography and etching to form the protrusions 111 in a state of cyclic array. Then, the semiconductor layer 110A is etched until the surface of the substrate 110 is exposed, and portions other than the protrusions 111 of the semiconductor layer 110A are all removed.

(Catalyst pattern formation step)
Next, as in the first embodiment, as a catalyst pattern formation step, an "adhesion step" and an "agglomeration step" are performed.

(Adhesion step)
That is, first, as shown in Fig. 8, as in the first embodiment, the catalyst material 20 is adhered to the substrate 110 by, for example, sputtering.

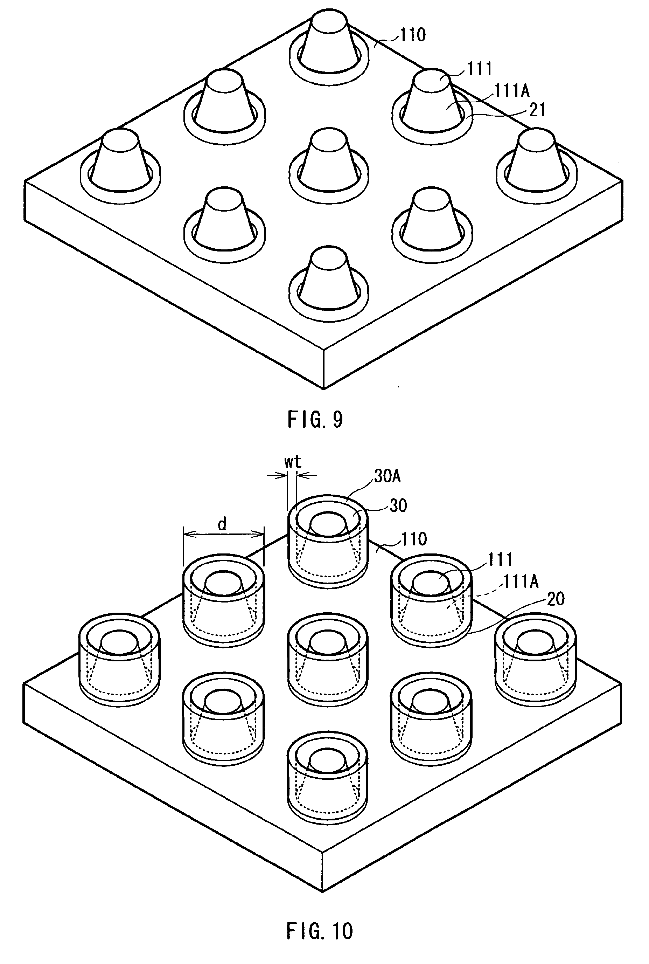

(Agglomeration step)
Next, by providing the substrate 110 with heat treatment, the catalyst material 20 is melted and agglomerated on the side faces 111A of the protrusions 111. Thereby, as shown in Fig. 9, the linear catalyst patterns 21 made of the catalyst material 20 are formed on side faces 111A of the protrusions 111. The catalyst material 20 described above has low contact characteristics to the surface of the substrate 110 made of glass, the melted catalyst material 20 is easily moved and agglomerated on the side faces 111A of the protrusions 111.

(Tubular structure formation step)
Subsequently, as shown in Fig. 10, by using the catalyst patterns 21, the tubular structures 30 made of, for example, carbon (C) are grown.

As above, in this embodiment, the semiconductor layer 110A is formed on the substrate 110 made of an insulating material, the semiconductor layer 110A is etched until the surface of the substrate 110 is exposed, and thereby the protrusions 111 are formed. Therefore, the catalyst patterns 21 can be formed more precisely, that is, can be formed in a pattern with a narrow width. Therefore, the wall thickness wt of the tubular structure 30 can be more decreased, the ends of the tubular structures 30 can be sharper edges, and the field electron emission characteristics can be more improved.

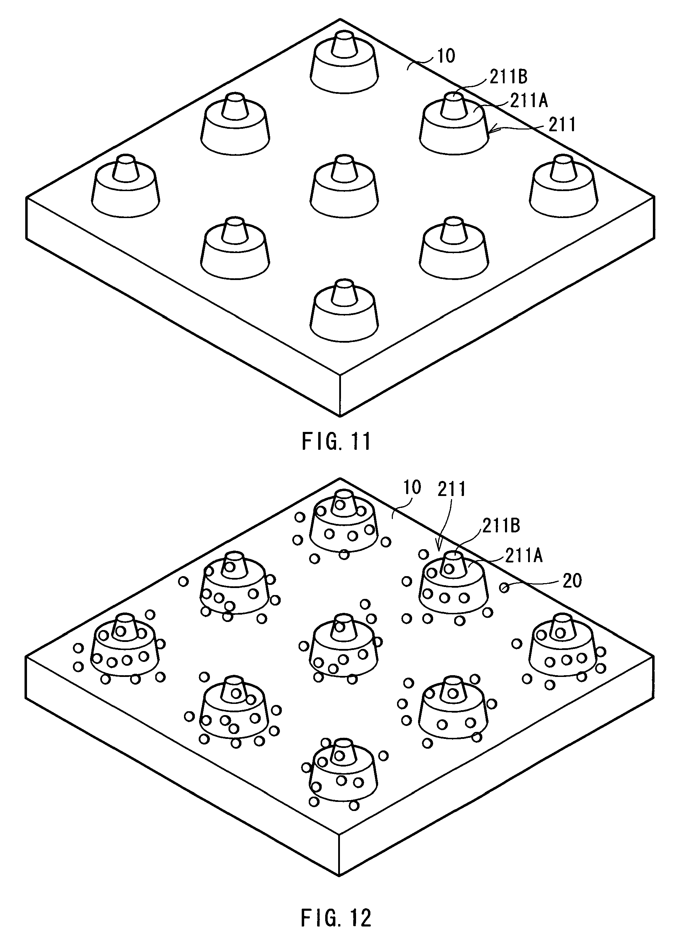

[Third embodiment]
<Method of manufacturing a fine structure>
Figs. 11 to 14 show a method of manufacturing a fine structure according to a third embodiment of the present invention. The method of this embodiment is the same as of the first embodiment, except that two steps 211A and 211B are formed in a protrusion 211, catalyst patterns 221A and 221B are respectively formed on side faces 211AA and 211BA of the steps 211A and 211B, and a two-layer tubular structure 230 is formed by using the catalyst patterns. Therefore, the same symbols are affixed to the same components, and the descriptions thereof are omitted.

(Protrusion formation step)
First, as shown in Fig. 11, the substrate 10 is provided with photolithography and etching to form the protrusions 211 having the first step 211A and the second step 211B in a state of cyclic array. The protrusion 211 has a shape that, for example, the column-shaped first step 211A and the column-shaped second step 211B with a diameter different from each other are layered from the substrate 10 side in the descending order of diameter. The first step 211A and the second step 211B are not necessarily formed concentrically.

(Catalyst pattern formation step)
Next, as in the first embodiment, as a catalyst pattern formation step, an "adhesion step" and an "agglomeration step" are performed.

(Adhesion step)
That is, as shown in Fig. 12, as in the first embodiment, the catalyst material 20 is adhered to the substrate 10 by, for example, sputtering.

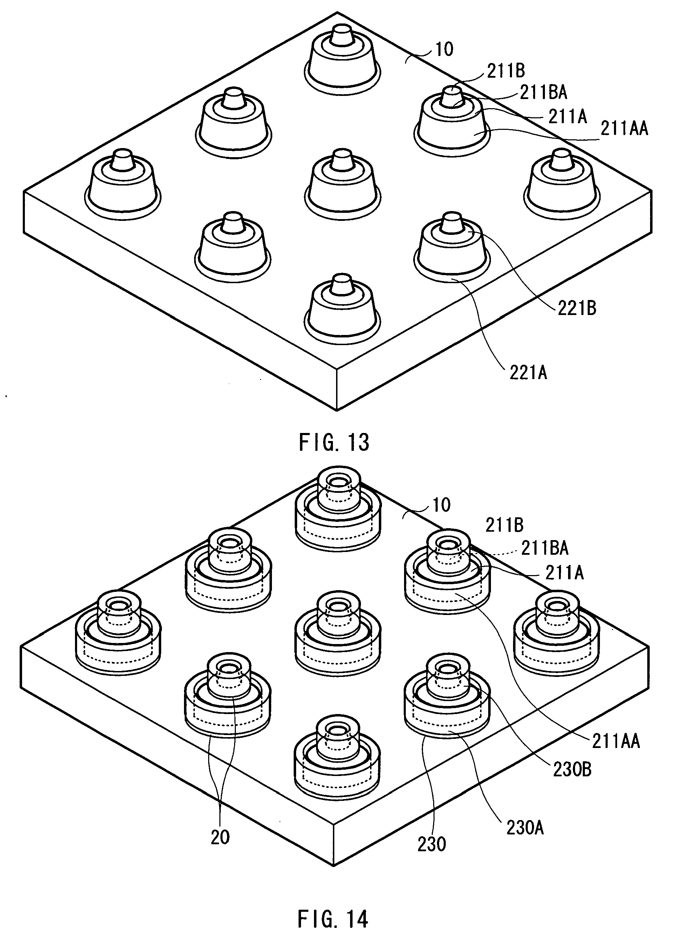

(Agglomeration step)
Next, by providing the substrate 10 with heat treatment, the catalyst material 20 is melted and agglomerated on the side faces 211AA and 211BA of the first step 211A and the second step 211B. Thereby, as shown in Fig. 13, the linear first catalyst pattern 221A and the linear second catalyst pattern 221B made of the catalyst material 20 are formed on the side faces 211AA and 211BA of the first step 211A and the second step 211B. The first catalyst pattern 221A and the second catalyst pattern 221B are formed circularly around the first step 211A and the second step 211B.

(Tubular structure formation step)
Subsequently, as shown in Fig. 14, a first tubular structure 230A is raised from the side face 211AA of the first step 211A by using the first catalyst pattern 221A, and a second tubular structure 230B is raised from the side face 211BA of the second step 211B by using the second catalyst pattern 221B. Thereby, a two-layer tubular structure 230 having the first tubular structure 230A and the second tubular structure 230B is grown. The first tubular structure 230A and the second tubular structure 230B have a diameter different from each other correspondingly to the first step 211A and the second step 211B.

As above, in this embodiment, the first step 211A and the second step 211B are formed in the protrusion 211, the catalyst patterns 221A and 221B are formed on the respective side faces 211AA and 211BA, and the first tubular structure 230A and the second tubular structure 230B are formed by using the foregoing catalyst patterns. Therefore, the two-layer tubular structure 230 having the first tubular structure 230A and the second tubular structure 230B with a diameter different from each other can be grown.

(Forth embodiment)
<Method of manufacturing a recording device>
Next, a method of manufacturing a recording device according to a forth embodiment of the present invention will be described. This embodiment is intended to form very fine protrusion patterns on the substrate, and to form a recording device by using tubular structures grown by utilizing the protrusions. That is, the method of this embodiment further includes an "insertion step" of inserting a magnetic material into the ends of the tubular structures after the very fine protrusion patterns are formed by using modulated heat distributions in a "protrusion formation step" and the tubular structures are grown by performing a "catalyst pattern formation step" and a "tubular structure formation step" as in the foregoing first embodiment.

(Protrusion formation step)
In this embodiment, the protrusion formation step preferably includes a "melting step" of providing the surface of the substrate with heat distributions modulated according to desired patterns and melting the surface of the substrate, and a "heat release step" of forming protrusion patterns in positions corresponding to the heat distributions by releasing heat from the surface of the substrate.

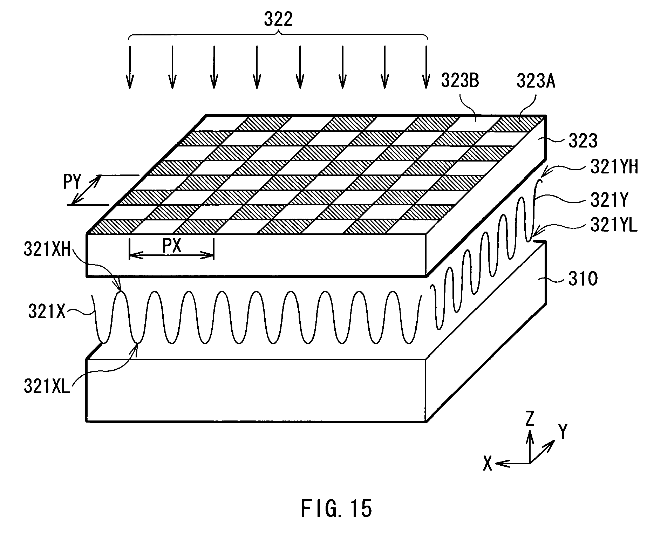

(Melting step)
First, the melting step will be described with reference to Fig. 15. In an X-direction heat distribution 321X, an X-direction high temperature region 321XH and an X-direction low temperature region 321XL are cyclically formed by modulating the surface temperatures of a substrate 310 in the X direction. Further, in a Y-direction heat distribution 321Y, a Y-direction high temperature region 321YH and a Y-direction low temperature region 321YL are cyclically formed by modulating the surface temperatures of the substrate 310 in the Y direction.

The X-direction heat distribution 321X and the Y-direction heat distribution 321Y are obtained by, for example, diffracting energy beam 322 using a diffraction grating 323 in which opaque portions 323A and transmissive portions 323B are two dimensionally arranged. As the diffraction grating 323, for example, a grating on which a mask for blocking the energy beam 322 is printed on the opaque portions 323A or the like can be used.

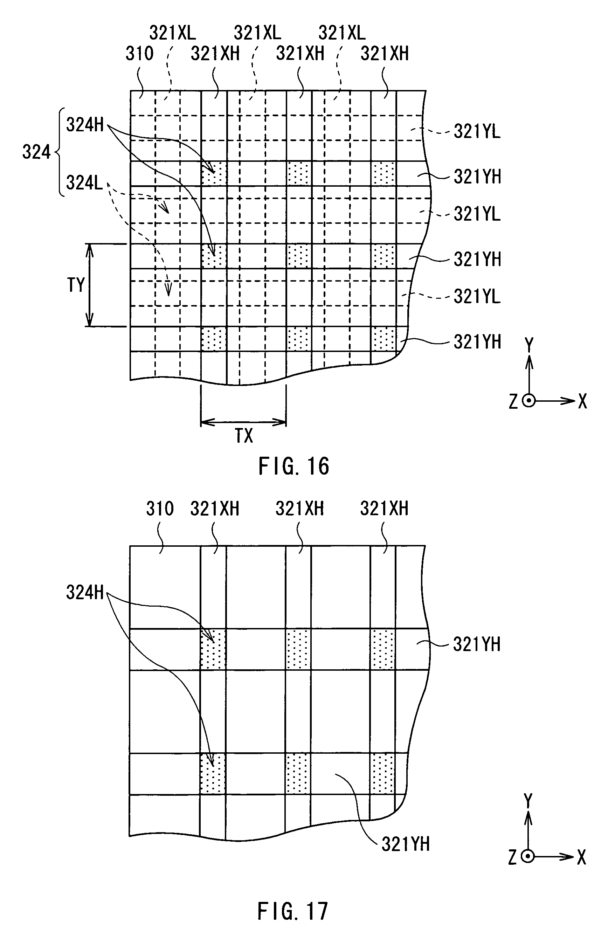

Fig. 16 shows a state that a heat distribution 324 is formed by superimposing the X-direction heat distribution 321X on the Y-direction heat distribution 321Y on the surface of the substrate 310. As shown in Fig. 16, on the surface of the substrate 310, the heat distribution 324 having a high temperature region 324H in the superimposed position of the X-direction high temperature region 321XH and the Y-direction high temperature region 321YH and having a low temperature region 324L in the superimposed position of the X-direction low temperature region 321XL and the Y-direction low temperature region 321YL is formed. Thereby, the high temperature regions 324H are two-dimensionally arranged along the directions, in which the opaque portions 323A and the transmissive portions 323B are arranged.

A spatial cycle TX in the X direction of the heat distribution 324, that is, an interval (pitch) in the X direction of the high temperature region 324H is determined according to a cyclic interval PX in the X direction of the diffraction grating 323 and a wavelength λ of the energy beam 322. Further, a spatial cycle TY in the Y direction of the heat distribution 324, that is, an interval (pitch) in the Y direction of the high temperature region 324H is determined according to a cyclic interval PY in the Y direction of the diffraction grating 323 and the wavelength λ of the energy beam 322. The smaller the wavelength λ is, or the finer the cyclic intervals PX and PY are, the finer the spatial cycles TX and TY of the heat distribution 324 can be. Here, in this embodiment, the cyclic interval PX in the X direction of the diffraction grating 323 means the sum of a dimension in the X direction of one opaque portion 323A and a dimension in the X direction of one transmissive portion 323B. The cyclic interval PY in the Y direction of the diffraction grating 323 means the sum of a dimension in the Y direction of one opaque portion 323A and a dimension in the Y direction of one transmissive portion 323B.

The cyclic interval PX in the X direction and the cyclic interval PY in the Y direction of the diffraction grating 323 can be set independently from each other. Therefore, as shown in Fig. 17, the spatial cycle TX in the X direction and the spatial cycle TY in the Y direction of the heat distribution 324 can be set independently from each other.

As the diffraction grating 323, instead of the grating in which the opaque portions 323A and the transmissive portions 323B are formed by mask printing, a grating in which depressions or protrusions are formed can be used. In the case of the diffraction grating 323 formed with depressions and protrusions, the cyclic interval PX in the X direction of the interval grating 323 means an interval (pitch) in the X direction of the depressions (or protrusions), and the cyclic interval PY in the Y direction of the interval grating 323 means an interval (pitch) in the Y direction of the depressions (or protrusions).

The energy amount of the energy beam 322 is set to become temperatures at which the surface of the substrate 310 is melted in the low temperature regions 324L. Thereby, the whole surface of the substrate 310 can be melted. Then, when excimer laser is used as the energy beam 322, the energy amount can be controlled by the irradiation number of pulse light emission. In this embodiment, the energy amount of the energy beam 322 is controlled to exceed a specific value. For example, the energy amount of the energy beam 322 is set to be 350 mJ/cm², and the pulse irradiation number is set to 100.

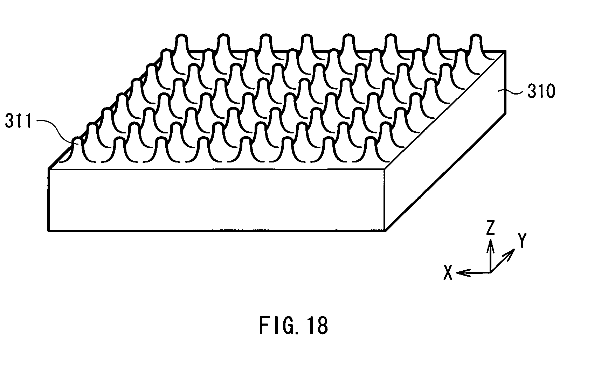

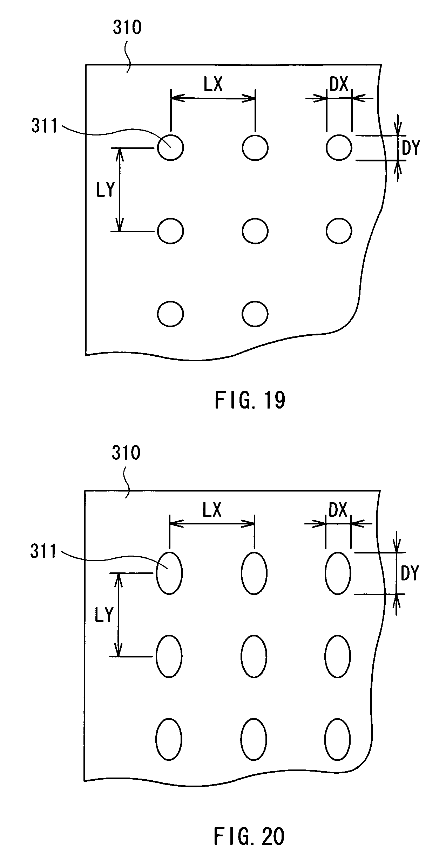

(Heat release step)
When irradiation of the energy beam 322 is stopped after the surface of the substrate 310 is melted in the melting step, the surface of the substrate 310 corresponding to the high temperature regions 324H is elevated and a plurality of protrusions 311 are formed on the substrate 310 as shown in Fig. 18 and Fig. 19 in the case that the energy amount of the energy beam 322 irradiated in the melting step exceeds a certain value.

Since the high temperature regions 324H are two-dimensionally arranged on the surface of the substrate 310, the protrusions 311 are correspondingly formed as pyramis-like protrusion patterns two-dimensionally arranged on the surface of the substrate 310. A dimension (diameter) DX in the X direction at the bottom of the protrusion 311 and a dimension (diameter) DY in the Y direction at the bottom of the protrusion 311 are determined by the melt temperatures and the cooling rate. The melt temperatures can be controlled by the energy amount of the energy beam 322, that is, the pulse irradiation number in the case of excimer laser. The higher the melt temperatures are, the larger the dimensions DX and DY of the protrusion 311 are. The cooling rate can be controlled by a method of arranging the substrate 310 or a holder of the substrate 310 in vacuum or in the gas atmosphere, a method by gas flow, a method of cooling in water or liquid nitrogen, a method of slow cooling with heating or the like. The faster the cooling rate is, the larger the dimensions DX and DY of the protrusion 311 are. The dimensions DX and DY of the protrusion 311 can be a given value larger than the size of the atom of a component material of the substrate 310 in principle. The value thereof can be under 50 nm, which cannot be achieved in the traditional photolithography technology, by controlling the melt temperatures and the cooling rate.

Further, an interval LX in the X direction and an interval LY in the Y direction of the protrusions 311 are determined according to the spatial cycles TX and TY of the heat distribution 324, that is, the cyclic intervals PX and PY of the diffraction grating 323 and the wavelength λ of the energy beam 322. The smaller the wavelength λ is, or the finer the cyclic intervals PX and PY of the diffraction grating 323 are, the finer the intervals LX and LY of the protrusions 311 can be. That is, the protrusion 311 with the fine intervals LX and LY, which cannot be achieved in the traditional photolithography can be obtained.

The intervals LX and LY of the protrusion 311 are preferably, for example, less than or equal to 100 nm. As described above, since the resolution limit in the traditional photolithography is 50 nm, the minimum pattern capable of being formed by the traditional photolithography is, for example, a land of 50 nm, a pit of 50 nm, and a land of 50 nm, and the pitch thereof becomes twice of the resolution limit, that is, 100 nm. Further the intervals LX and LY of the protrusion 311 are more preferably less than or equal to 50 nm. Since the resolution limit in the traditional electron beam lithography is about 25 nm, the minimum pattern interval capable of being formed by the traditional electron beam lithography similarly becomes twice of the resolution limit, that is, 50 nm.

When the spatial cycle TX in the X direction and the spatial cycle TY in the Y direction of the heat distribution 324 are set independently from each other as shown in Fig. 17, the protrusion 311 is correspondingly formed elliptically as shown in Fig. 20.

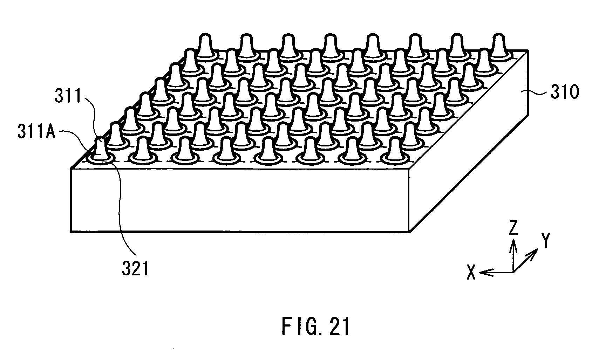

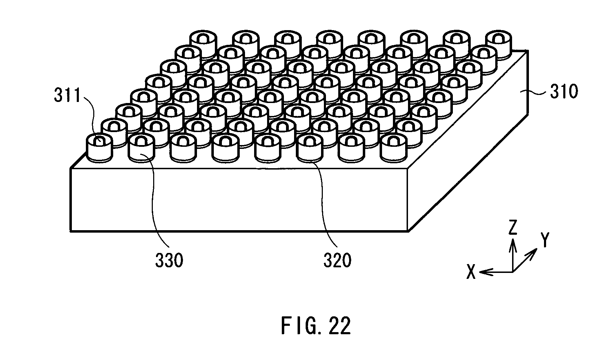

(Catalyst pattern formation step and tubular structure formation step)
Next, as shown in Fig. 21, a catalyst pattern formation step is performed as in the first embodiment, and catalyst patterns 321 made of a catalyst material 320 (not shown in Fig. 21, and refer to Fig. 22) are formed on the side faces 311A of the protrusions 311. Subsequently, as shown in Fig. 22, a tubular structure formation step is performed as in the first embodiment, and tubular structures 330 are formed by using the catalyst patterns 321 (refer to Fig. 21). After the tubular structures 330 are grown, the catalyst material 320 of the catalyst patterns 321 is located between the substrate 310 and the tubular structure 330 as in the first embodiment.

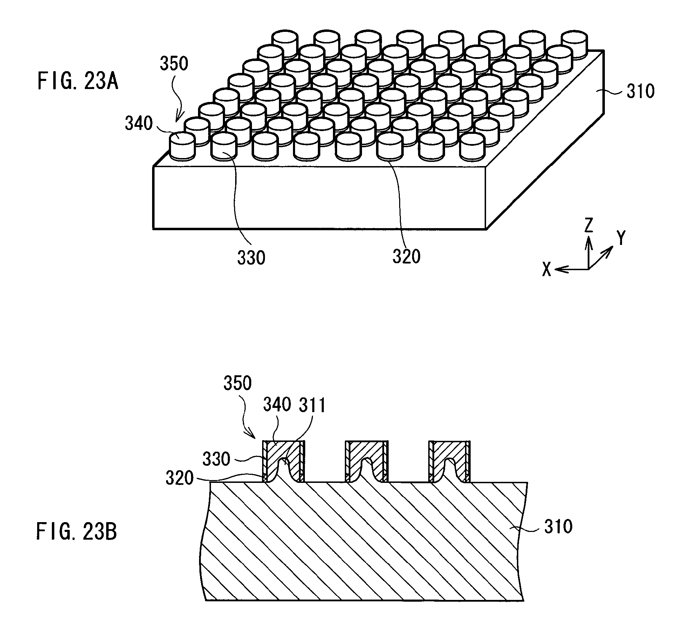

(Insertion step)
After that, as shown in Figs. 23A and 23B, by arranging the substrate 310 formed with the tubular structures 330 in the atmosphere containing, for example, iron as a magnetic material, the magnetic material is inserted at least into the ends of the tubular structures 330 to form magnetic layers 340. Consequently, a recording device including a plurality of recording elements 350 corresponding to the plurality of protrusions 311 is completed. Each recording element 350 has the catalyst material 320, the tubular structure 330, and the magnetic layer 340. The magnetic layer 340 inserted into each tubular structure 330 is isolated from the magnetic layer 340 in the adjacent other tubular structures 330. Therefore, writing information in each magnetic layer 340 and reading information therefrom can be surely performed.

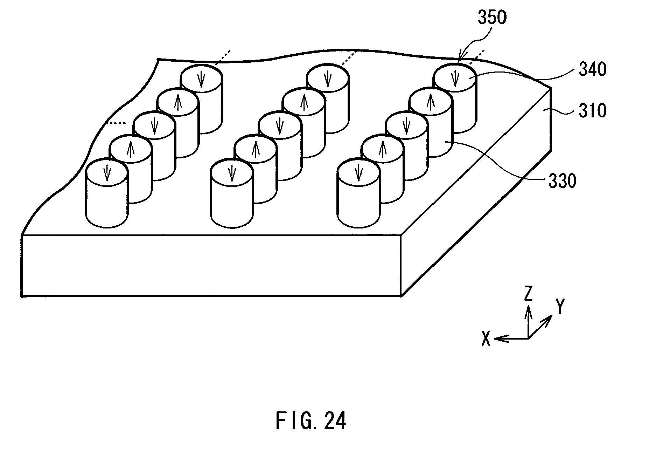

Fig. 24 shows an example of recording state in the recording device. In the recording device, recording (writing) signals and reproducing (reading) signals can be performed by controlling the magnetization directions of the magnetic layers 340 as indicated by arrows in Fig. 24. For writing and reading of signals, for example, signals may be written by generating a given flux by, for example, an unshown fine coil, and signals may be read by a GMR head. Otherwise, writing and reading of signals may be performed by so-called magneto optical method.

Writing information in the recording device and reading information therefrom by, for example, magneto optical method will be hereinafter described. The information is written, for example, as follows. Temperatures of the magnetic layers 340 made of iron are raised to the Curie temperature, the magnetization direction of the magnetic layers 340 is oriented in a certain direction by a bias magnetic field (erasing mode). After that, the bias magnetic field is turned into the magnetization direction opposite of in the erasing mode, temperatures of only the magnetic layers 340 of the specific tubular structures 330 are raised by laser beam with a spot diameter decreased by an unshown optical lens, irradiation of the laser beam is stopped, and thereby the magnetization direction of the magnetic layers 340 is turned into the opposite direction of in erasing mode. Further, the information is read as follows. Laser beam is irradiated to the magnetic layers 340 in the tubular structures 330, and the Kerr rotation angle of the reflected light of laser beam is detected, and thereby the magnetization direction of each magnetic layer 340 can be obtained as a reproduction signal. Then, in this embodiment, since the magnetic layers 340 are isolated by the tubular structures 330, a given magnetization direction can be stably retained for a long period without being influenced by the magnetic layers 340 in the adjacent tubular structures 330.

As mentioned above, in this embodiment, the magnetic material is inserted into the tubular structures 330 to form the magnetic layers 340. Therefore, the recording device using the tubular structures 330 made of carbon or the like can be easily realized with an easy method. Further, the steps of opening the end of the tubular structure 330 and leveling the height thereof are not necessary, and the magnetic layers 340 can be formed effectively.

Further, the position accuracy of the tubular structures 330 and the magnetic layers 340 inserted inside thereof is high, and the characteristics of the recording device can be improved. Further, since the magnetic layers 340 are isolated by the tubular structures 330, a given magnetization direction can be stably retained for a long period without being influenced by the magnetic layers 340 in adjacent other tubular structures 330, and reliability of the recording device can be improved.

In particular, in this embodiment, in the protrusion formation step, the surface of the substrate 310 is melted by providing the surface of the substrate 310 with the heat distribution 324 modulated according to a given pattern, and then heat is released from the surface of the substrate 310, and thereby the patterns of the protrusions 311 are formed in the positions corresponding to the heat distribution 324. Therefore, by controlling the heat distribution 324, fine patterns of the protrusions 311, which cannot be achieved by the traditional photolithography can be formed. Therefore, by growing the tubular structures 330 at the protrusions 311 and forming the magnetic layers 340, the magnetization length can be a small size, which cannot be achieved by the traditional photolithography, and the recording density of the recording device can be significantly high.

Further, specific examples of the present invention will be hereinafter described.

(Example 1)
As in the first embodiment, the fine structure 40 was fabricated. Then, protrusions 11 being 200 nm in diameter and 5 µm in height were formed on the substrate 10 made of silicon. As the catalyst material 20, iron-cobalt-nickel alloy containing 54 wt% of iron (Fe), 17 wt% of cobalt (Co), and 29 wt% of nickel (Ni) was adhered to the substrate 10 by sputtering. Subsequently, the substrate 10 was put in the furnace, inside of the furnace was evacuated by a scroll pump for 30 minutes, and then purge with argon (Ar) gas was conducted at a flow rate of 300 SCCM for 30 minutes. After that, the temperatures of the furnace were raised up to 900 deg C at a rate of 15 deg C/min in the argon atmosphere, and thereby the catalyst patterns 21 were formed. Subsequently, in order to activate the catalyst material 20, helium (He) gas mixed with 14.8% of hydrogen (H₂) was supplied at a flow rate of 200 SCCM. Further, argon gas mixed with 12.5% of metane (CH₄) as a raw material of carbon was supplied at a flow rate of 200 SCCM, and helium (He) gas mixed with 14.8% of hydrogen (H₂) was supplied at a flow rate of 100 SCCM, and thereby the tubular structures 30 were formed.

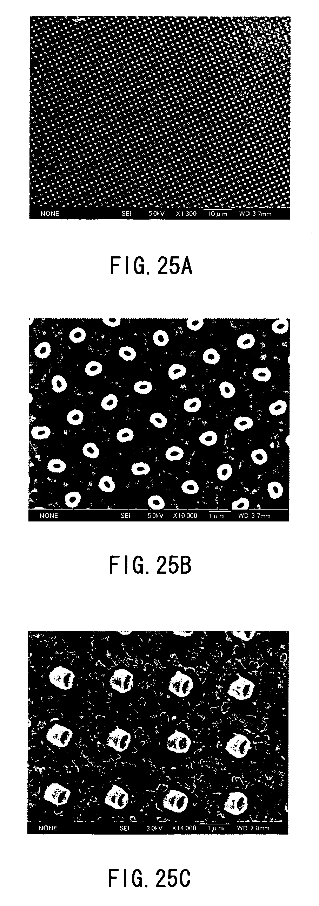

SEM (Scanning Electron Microscope: JSM-6700F, JEOL) photographs of the obtained fine structure are shown in Figs. 25A to 25C. When the average thickness of the catalyst material adhered to the substrate in order to grow the fine structure was measured by using a crystal monitor probe, the average thickness was 0.5 nm. As shown in the enlarged photographs of Fig. 25B and Fig. 25C, it was confirmed that the tubular structures were grown around the protrusions, and the wall thickness wt of the tubular structure was from 30 nm to 100 nm. Further, white dot sections showing existence of the catalyst material and carbon fine structures around the protrusions were not confirmed. In the result, it was found that the catalyst material around the protrusions was agglomerated and the cyclic catalyst patterns were thereby formed.

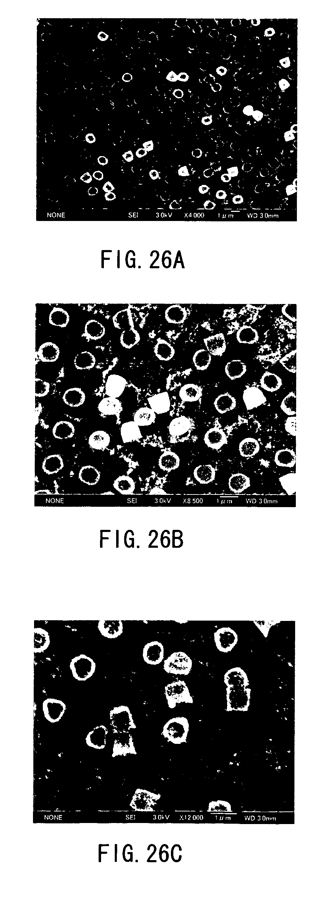

Figs. 26A to 26C are SEM photographs showing the fine structure from various angles by scraping the fine structure with forceps or the like. From the SEM photographs, it is evidently shown that the grown tubular structures had protrusions in the voids.

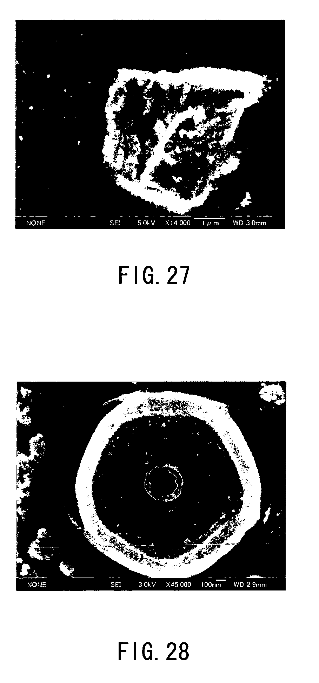

As a comparative example, in Fig. 27, an SEM photograph of a sample, in which attempt was made so that tubular structures would be formed in a manner that protrusions were peeled off before adhering a catalyst material thereto, and then the catalyst material was adhered and agglomerated as in Example 1. As evidenced by Fig. 27, though plenty of the catalyst material was adhered to the portions from which the protrusions were peeled off, cyclic catalyst patterns by agglomeration were not formed, and carbon nanotubes were grown around the protrusions instead of tubular structures.

(Example 2)
As in the third embodiment, a fine structure was fabricated. An SEM photograph of the fine structure obtained in Example 2 is shown in Fig. 28. It is found that a tubular structure with two layers having a different diameter and a different wall thickness from each other was formed. The wall thickness wt of the tubular structure was from 30 nm to 100 nm as in Example 1.

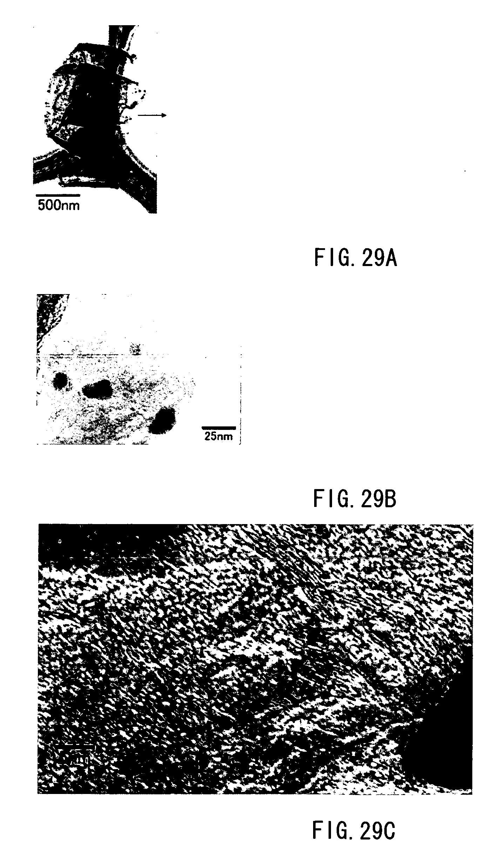

For the fine structure obtained in Example 2, the structure of the tubular structures was analyzed by using TEM (Transmission Electron Microscope). The result is shown in Figs. 29A to 29C. From Figs. 29A to 29C, it is found that the tubular structures were made of a mixture of an amorphous material and a crystalline material. In Fig. 29C, the portion shown as layers in the central upper right is the portion made of the crystalline material, and the peripheral section thereof is the portion made of the amorphous material.

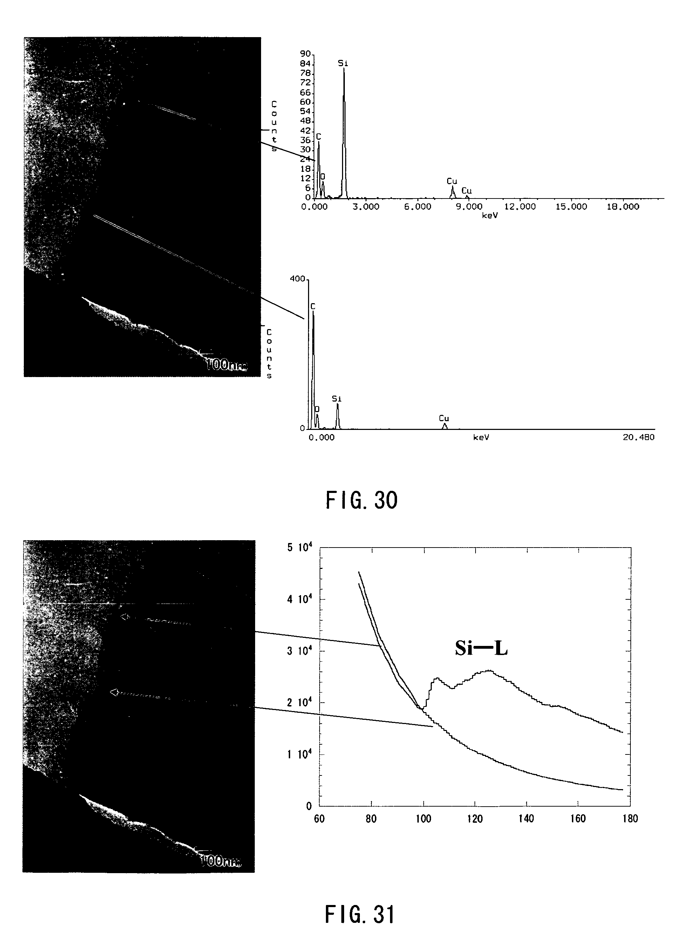

Further, the material of the tubular structures obtained in Example 1 was analyzed by using EDX (Energy Dispersive X-ray analysis) and EELS (Electron Energy Loss spectrum). The result is shown in Fig. 30 and Fig. 31. As the tubular structures were formed on the substrate made of silicon, as shown in Fig. 30 and Fig. 31, silicon was adhered to the tubular structures, but the tubular structures themselves did not contain silicon, but were made of carbon. Therefore, from Figs. 29A to 29C and Fig. 31, it can be concluded that the tubular structures were made of amorphous carbon and graphite.

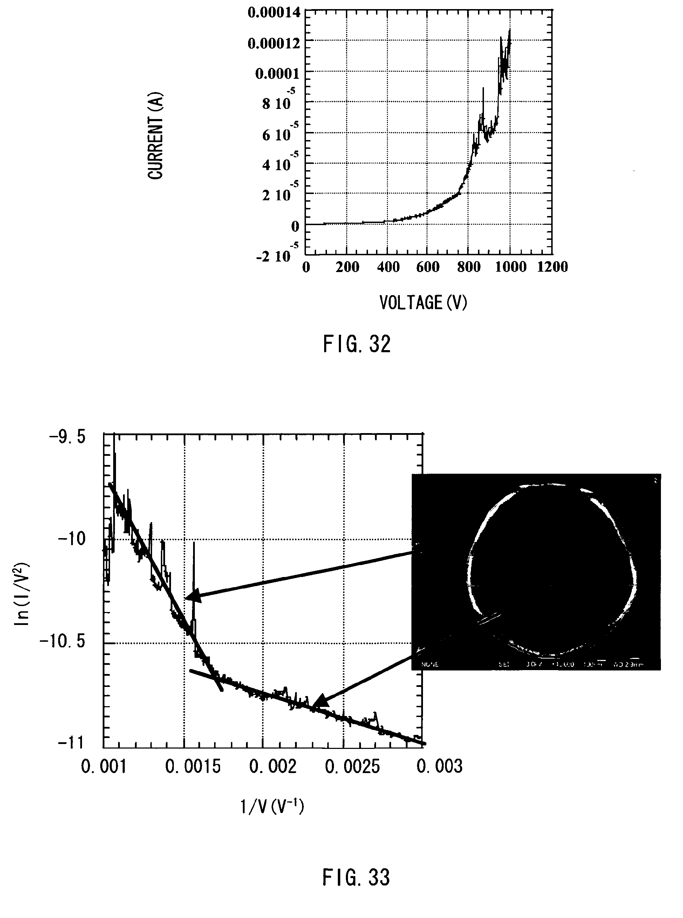

Further, the field electron emission characteristics of the fine structure obtained in Example 2 were examined. The measurement method and conditions were as follows. The fine structure and an electrode made of copper (Cu) were oppositely arranged with a distance of 100 µm in between. A tunnel current when a voltage from 0 to 1000 V was applied between the fine structure and the electrode was recorded by a high precision ammeter. The result is shown in Fig. 32. The emission current was raised at 500 V, and the threshold was 5 V/µm. Further, Fig. 33 shows F-N (Fowler-Nordheim) plot corresponding to Fig. 32. In the F-N plot, two different F-N regions are shown. It is thinkable that the two different F-N regions corresponded to the two layers of the tubular structure with a different diameter and a different wall thickness from each other. Field electron emission at low voltages was attributable to only the inner tubular structures, and field electron emission at high voltages was attributable to both the outer and the inner tubular structures. When the average field focusing factor β was calculated by utilizing the F-N plot where the carbon work function ϕ was 5 eV, β was about 6000. This value was almost the same value as of other carbon structure reported in Document 1.

As above, according to Example 1 and Example 2, the fine structure having the tubular structures made of carbon with the wall thickness wt of from 30 nm to 100 nm could be formed around the protrusions with favorable position accuracy. That is, it was found that when the protrusions were formed on the substrate, the linear catalyst patterns made of a catalyst material were formed on the side faces of the protrusions, and then the tubular structures were grown by using the catalyst patterns, the tubular structures having sharp-edged ends could be formed with high position accuracy by using the traditional lithography, and the field electron emission characteristics could be improved.

While the present invention has been described with reference to the embodiments and the examples, the present invention is not limited to the foregoing embodiments, and various modifications may be made. For example, the material, the thickness, the wall thickness, the deposition method, the deposition conditions and the like of each layer described in the foregoing embodiments are not limited thereto, but other material, thickness, and wall thickness may be used, or other deposition method and deposition conditions may be used. For example, the formation method of the protrusions 11 is not limited to the photolithography used in the first to the third embodiments or the method using the modulated heat distributions as described in the forth embodiment.

Further, in the first embodiment, the structure of the FED has been described with a specific example. However, all components are not necessarily included, or other components may be further included. Further, the present invention can be also applied to an FED with other structure. Further, it is possible to structure an FED by using the fine structure described in the second and the third embodiments.

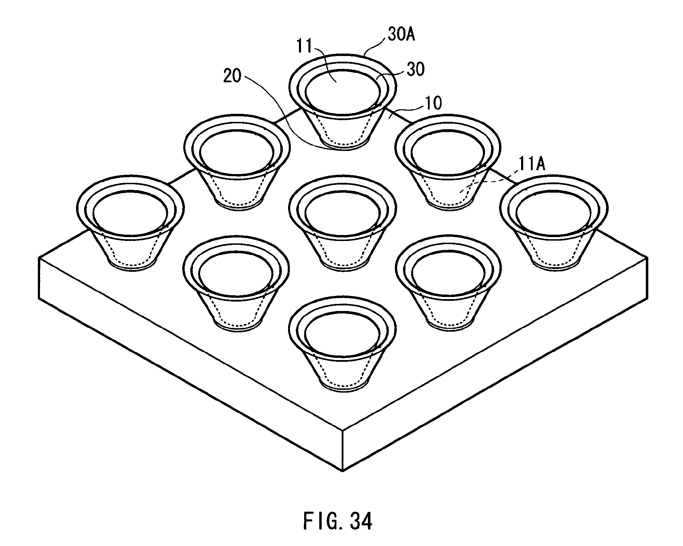

In addition, in the foregoing first embodiment, the protrusions 11 have been described as a tapered column-shaped protrusion. However, the side face 11A of the protrusion 11 can be sloped so that the diameter is increased toward the end of the protrusion 11 as shown in Fig. 34. In this case, the tubular structure 30 becomes a horn-like shape enlarging toward the end. The protrusions 11 do not function as a guide for growth of the tubular structures 30.

Furthermore, in the foregoing second embodiment, it is possible that a protrusion having three or more steps is formed and a tubular structure having a multilayer structure with three or more layers is formed.

Furthermore, in the foregoing embodiments, the adhesion step and the agglomeration step are performed in the catalyst pattern formation step. However, the catalyst pattern may be formed by other methods.

Furthermore, the tubular structure is not limited to the structure made of carbon (C), but it is possible to grow the material made of at least one from the group consisting of silicon (Si), gold (Au), zinc oxide (Zn), and cadmium (Cd).

Furthermore, in the foregoing fourth embodiment, the case forming the protrusions 311 by using the modulated heat distributions has been described. However, the protrusions may be formed by photolithography as in the first embodiment, or may be formed by other method.

Furthermore, for example, in the foregoing forth embodiment, the energy amount of the energy beam 322 is adjusted by the number of pulse irradiation. However, the number of pulse irradiation, the irradiation intensity, and the pulse width can be respectively adjusted.

Furthermore, in the foregoing fourth embodiment, the case in which formation of the heat distribution 324 by irradiating the energy beam 322 is performed by using the diffraction grating 323 has been described. However, instead of the diffraction grating 323, for example, a beam splitter may be used.

Furthermore, in the foregoing fourth embodiment, the energy beam 322 is irradiated by using XeCl excimer laser. However laser other than the XeCl excimer laser may be used. Further, as a heating means, as far as the means can form the heat distributions by modulation, heating may be provided by other methods such as a general-purpose electric heating furnace (diffusion furnace) and a lamp.

Furthermore, in the foregoing fourth embodiment, after the melting step is finished, the heat release step is performed by natural cooling at ambient temperatures. However, it is possible to shorten the heat release step by forced cooling by temperatures lower than ambient temperatures.

Furthermore, in the foregoing fourth embodiment, the case using iron (Fe) as a magnetic material for the magnetic layers 340 has been described. However, tin (Sn), titanium (Ti), bismuth (Bi), germanium (Ge), antimony (Sb), lead (Pb), aluminum (Al), indium (In), sulfur (S), selenium (Se), cadmium (Cd), gadolinium (Gd), or hafnium (Hf) may be used.

### INDUSTRIAL APPLICABILITY

The fine structure of the present invention is significantly useful as a field electron emission device for an FED or a recording device. Further, since the fine structure is formed on the substrate with high position accuracy and high shape accuracy, utilization as a template for catalyst transcription is available, in addition, the fine structure of the present invention has a wide demands and usages such as an STM probe, a biosensor, a high frequency transistor, a quantum device, an LSI memory, a logical circuit and a wiring, an MEMS (Micro Electro Mechanical Systems).

## Claims

1. A method of manufacturing a fine structure including:
a protrusion formation step of forming protrusions on a substrate;
a catalyst pattern formation step of forming catalyst patterns made of a material having a catalytic function on the side faces of the protrusions; and
a tubular structure formation step of growing tubular structures by using the catalyst patterns.

2. The method of manufacturing a fine structure according to claim 1, wherein the protrusions are formed in a column shape, the catalyst patterns are circularly formed, and the tubular structures are formed in a state of tube.

3. The method of manufacturing a fine structure according to claim 1, wherein the catalyst pattern formation step includes:
an adhesion step of adhering the material having a catalytic function on the substrate; and
an agglomeration step of melting the material having a catalytic function by providing the substrate with heat treatment, and agglomerating the melted material on the side faces of the protrusions.

4. The method of manufacturing a fine structure according to claim 3, wherein the material having a catalytic function is adhered with the thickness to the degree that the material having a catalytic function can be melted and agglomerated on the side faces of the protrusions in the agglomeration step.

5. The method of manufacturing a fine structure according to claim 1, wherein two or more steps are formed in the protrusion,
the catalyst pattern is formed on each side face of the two or more steps, and
the tubular structure is raised from each side face of the two or more steps by using the catalyst pattern.

6. The method of manufacturing a fine structure according to claim 1, wherein a semiconductor substrate is used as the substrate, and the protrusions are formed by etching.

7. The method of manufacturing a fine structure according to claim 1, wherein a substrate made of an insulating material is used as the substrate, the protrusions are formed by forming a semiconductor layer on the substrate and etching the semiconductor layer until the surface of the substrate is exposed.

8. The method of manufacturing a fine structure according to claim 1, wherein the tubular structures are formed from at least one from the group consisting of carbon (C), silicon (Si), gold (Au), zinc oxide (Zn) and cadmium (Cd).

9. A fine structure comprising:
a substrate formed with protrusions;
a material having a catalytic function arranged on the side faces of the protrusions; and
tubular structures which are raised from the side faces of the protrusions and whose ends are opened.

10. The fine structure according to claim 9, wherein the protrusions are in a column shape and the tubular structures are in a state of tube.

11. The fine structure according to claim 10, wherein the wall thickness of the tubular structure is less than or equal to one half of the diameter of the tubular structure.

12. The fine structure according to claim 9, wherein the protrusion has two or more steps,
the material having a catalytic function is formed on each side face of the two or more steps, and
the tubular structure is raised from each side face of the two or more steps.

13. The fine structure according to claim 9, wherein the wall thickness of the tubular structure is less than or equal to 50 nm.

14. The fine structure according to claim 9, wherein the tubular structure is made of at least one from the group consisting of carbon (C), silicon (Si), gold (Au), zinc oxide (Zn) and cadmium (Cd).

15. A display unit comprising:
a fine structure having a substrate formed with protrusions, a material having a catalytic function arranged on the side faces of the protrusions, and tubular structures which are raised from the side faces of the protrusions and whose ends are opened;
an electrode for applying a given voltage to the tubular structure to allow the tubular structure to emit electrons; and
a light emitting portion for receiving the electrons emitted from the fine structure and emitting light.

16. A method of manufacturing a recording device including:
a protrusion formation step of forming protrusions on a substrate;
a catalyst pattern formation step of forming catalyst patterns made of a material having a catalytic function on the side faces of the protrusions;
a tubular structure formation step of growing tubular structures by using the catalyst patterns; and
an insertion step of inserting a magnetic material into at least at the end of the tubular structure.

17. The method of manufacturing a recording device according to claim 16, wherein the protrusion formation step includes:
a melting step of providing the surface of the substrate with heat distributions modulated according to desired patterns and melting the surface of the substrate; and
a heat release step of forming patterns of the protrusions in positions corresponding to the heat distributions by releasing heat from the surface of the substrate.

18. The method of manufacturing a recording device according to claim 17, wherein the heat distributions are obtained by irradiation of energy beam.

19. The method of manufacturing a recording device according to claim 17, wherein the heat distributions are two dimensionally obtained by diffracting energy beam.

20. A recording device comprising:
a substrate having a plurality of protrusions; and
a plurality of recording elements corresponding to the plurality of protrusions, wherein
each of the plurality of recording elements includes:
a material having a catalytic function, which is arranged on the side face of the protrusion;
a tubular structure which is raised from the side face of the protrusion and whose end is opened; and
a magnetic layer made of a magnetic material, which is inserted into at least at the end of the tubular structure.
